# EUROPEAN PATENT APPLICATION

(11) **EP 0 525 850 A1**
(43) Date of publication of application: **03.02.1993**
(21) Application number: 92201935.1
(22) Date of filing: 30.06.1992
(51) Int. Cl.: B60S 1/32

(54) **Moulded composite cantilever wiper arm**

(30) Priority: 29.07.1991 US 736871
(71) Applicant: GENERAL MOTORS CORPORATION, Detroit Michigan 48202 (US)
(72) Inventor: Buchanan, Harry Charles, Jr., Spring Valley, OH 45370-9635 (US); Marra, Michael David, Farmington Hills, MI 48336 (US); Bui, Chanh Minh, Dayton, OH 45429 (US); Morgan, Mark Robert, Dayton, OH 45459 (US); Patrick, Ronald Wayne, Miamisburg, OH 45342 (US); Graham, Bruce Patrick, Dayton, OH 45431 (US); Victor, Keith Robert, Centerville, OH 45458 (US)
(74) Representative: Denton, Michael John

(57) **Abstract**

A cantilever-type wiper arm (24) has a unique shape that allows it to meet its structural requirements, is aerodynamically efficient, and also allows it to be efficiently moulded as a fibre-reinforced, composite structure. In cross-sections taken along its length, the arm comprises a series of symmetrical ellipses of nearly constant area. The arm (24) is arranged so that, in use, the major axes of each of the ellipses of the cross-sections are parallel to the windshield (20) of a motor vehicle on which it is used. The base section (A) of the arm (24) is wider and thinner, giving good up and down flexibility combined with good side to side stiffness. The tip section (C) of the arm (24) is narrower and thicker, thereby maintaining the same basic profile, but imparting more torsional rigidity. The intermediate section (B) of the arm (24) provides a smooth transition from the base section (A) to the tip section (C). The smooth shape and constant area of cross-section allows the arm (24) to be moulded as a fibre-reinforced composite structure with a constant fibre-to-resin ratio all along its length.

## Description

This invention relates to vehicle wiper arms in general, and specifically to a one-piece, cantilever-type wiper arm moulded as a fibre-reinforced composite structure as specified in the preamble of claim 1, for example as disclosed in DE-A-31 42 716.

Vehicle wiper blades are supported by wiper arms as they sweep back and forth over the surface of a windshield of a motor vehicle. The arms are fixed rigidly at their bases to wiper posts, with wiper blades mounted to the tips of the arms. The wiper arm and blade reverse direction rapidly at the inner and outer limits of the wipe pattern, especially at higher wiper speeds, subjecting the wiper arm to fairly severe loading in the "in plane" direction, that is, in the direction parallel to the plane of the windshield, so the arm must be stiff in the "in plane" direction. Every arm structure incorporates some mechanism to resiliently load the blade against the windshield surface, generally a stretched tension spring. The surface of almost any windshield rises and falls over the wipe pattern, causing the arm to flex up and down correspondingly from its nominal, design position. In order to keep the blade wiping pressure relatively constant, it is important that the arm not be too stiff in the "out of plane" direction, perpendicular to the windshield. As the blade is swept back and forth, it is also rocked back and forth, which puts a twisting, torsional load on the arm. It is also important, therefore, that the arm be torsionally rigid in order that the blade not rock back and forth to too great a degree, which could affect wipe quality.

Every wiper arm designer works within these defined constraints of "in plane" stiffness, "out of plane" flexibility, and torsional rigidity. Conventional arm structures meet those requirements fairly easily. Conventional arms incorporate a base that is fixed to the wiper post, and a lever that is pivoted to the base by a pin. The pin effectively de-couples the in and out of plane stiffnesses, so that one can easily be made high and the other low. The wipe pressure can be chosen simply by choosing the stiffness and geometry of the tension spring, which continually pulls the lever down about the pivot. Furthermore, the base and lever are typically box beam structures that have an inherently high torsional rigidity.

The conventional structure begins to lose its advantages with newer vehicle body designs, however. As windshields are raked back ever farther in the interest of aerodynamics, arm length and mass increase, which creates more severe reversal loading. Whilst the conventional arm is stiff enough, its inertia may overpower standard sized motors and linkages, causing overshoot of the blade. Steeply-raked windshields may also be highly curved at the sides, rising and falling a good deal more over the wipe pattern, making the "out of plane" flexibility requirement more crucial. Another problem presented by steeply-raked windshields is wind noise and drag. Windshields that are more vertical are also generally perpendicular to the direction of air flow over the vehicle. Whilst this is not good from an aerodynamic standpoint, it does serve to create a dead zone near the surface of the windshield as it is buffeted into the air, especially near the lower edge of the windshield where it meets the hood. Consequently, the wiper arms are not exposed to a particularly fast air flow, at least when they are parked near the bottom of the windshield. As the windshield is raked back ever farther from the vertical, it slips through the air more easily, but it is exposed to a faster air flow that moves nearly parallel to its surface. So, too, with a wiper arm that sits above that surface. Conventional, box-section wiper arms present a relatively large profile to that flow, and may cause unacceptable noise, drag and wiper lift.

Another known wiper arm consists of a single elongated beam that is cantilevered out from the wiper post, and is therefore called a cantilever arm. Typically, a cantilever arm is a resilient metal stamping. With no separate spring, the cantilever wiper arm supplies wiping pressure through its own inherent resilience, and is pre-curved in its free state so that it is flexed in its installed position to provide the necessary wiping pressure. In order to provide the necessary combination of "in plane" stiffness and "out of plane" flexibility, a cantilever arm is wide at the base, but thin throughout its length, sometimes progressively thinner moving from the base towards the tip. Whilst undeniably simple, the wide thin profile is inherently torsionally weak, especially towards the tip where the blade is attached. Some designs propose crowning or reverse curving the cross-section of the beam to increase its stiffness, but even that has been found not to meet torsional rigidity requirements.

Known cantilever arm designs would also fall short in the area of wind noise. Whilst a thin beam presents an undeniably smaller profile to the wind, the sharp-edged, constant-thickness shape of known cantilever arms would actually be very noisy if exposed to a rapid air flow, even more so if given a crowned shape. With increasing length, such a torsionally compliant design would also be potentially unstable in the wind. Consequently, known cantilever arm designs have not found any significant commercial acceptance. Furthermore, it is hoped that metal may be substantially eliminated from wiper arms in the future in favour of fibre-reinforced composite material, a corrosion-free material with much lighter weight. The shapes of known metal cantilever designs do not lend themselves to being replicated in fibre-reinforced composite material.

A unitary, cantilever-type wiper arm according to the present invention is characterised by the features specified in the characterising portion of claim 1.

The invention provides a cantilever-type wiper arm with a particular shape and design that meets the necessary structural requirements, which is aerodynamically efficient, and which can be made as a composite fibre-reinforced member.

In the preferred embodiment disclosed, the wiper arm is an elongated body comprised of a series of symmetrical elliptical cross sections of nearly constant area. The arm is oriented such that the major axes of the elliptical cross sections are all substantially parallel to the plane of the windshield, and the minor axes perpendicular thereto. So shaping and orienting the arm allows all the objectives noted above to be met. The "in plane" and "out of plane" stiffness requirements are met by providing a base section in which the major axis is significantly larger than the minor axis, giving proportionally more "in plane" than "out of plane" stiffness. The torsional rigidity requirement is met by providing a tip section that is significantly thicker than the base section, that is, in which the minor axis is greater. However, the major axis is shorter than for the base section, so that the overall cross-sectional area is still kept constant. Between the base and tip sections is an intermediate section in which the minor axis grows and the major axis shrinks continuously, moving from the base to tip section. This provides a smooth transition between the other two sections of the arm.

Besides providing the necessary structural properties to the arm, the symmetrical elliptical cross-sections, oriented as they are, present an aerodynamically efficient profile to the air stream, as compared to conventional arms of either the box beam or cantilever type. There are no sharp edges presented to the wind, and no asymmetrical, crowned cross-sections to create lift and excessive noise. Moreover, since the cross-section is kept constant in area, the shape lends itself very well to being moulded as a fibre-reinforced body with full-length, unidirectional fibres. The percentage of fibre to resin may be kept constant at every point along the length of the body. There are no sharp corners or localized discontinuities to interfere with the moulding process.

It is, therefore, an object of the invention to provide a cantilever-type wiper arm having a shape that gives all the necessary structural requirements and may also be efficiently moulded as a composite, fibre-reinforced structure.

It is another object of the invention to provide such an arm shape that comprises a series of substantially constant-area, elliptical cross-sections with the major and minor axes relatively sized to give the necessary structural properties.

It is another object of the invention to provide such an arm shape in which a base section has elliptical cross-sections with relatively longer major axes and shorter minor axes, so as to give the required "in plane" stiffness and "out of plane" flexibility, and in which a tip section has more nearly equal major and minor axes, so as to give the required torsional rigidity.

It is still another object of the invention to provide such a wiper arm in which all of the elliptical cross-sections are symmetrical and have their major axes oriented substantially parallel to the surface of the windshield, so as to combine moulding efficiency with aerodynamic efficiency.

These and other objects and features of the invention will appear from the following written description, and from the accompanying drawings, in which:
Figure 1 is a front view of a highly raked windshield incorporating conventional, box-beam type wiper arms;
Figure 2 is a view like Figure 1, but incorporating a pair of wipers with wiper arms made according to the invention;
Figure 3 is a perspective view of the passenger- side wiper arm of Figure 2 alone;
Figure 4 is a perspective view of a fibre-resin bundle forming a charge used to mould the wiper arm of Figure 2;
Figure 5 is a schematic view of a moulding process showing the fibre-resin bundle of Figure 4 positioned between a pair of mould halves;
Figure 6 is a view like Figure 5, but showing the mould halves closed;
Figure 7 is a view like Figure 6, but showing the mould halves open again;
Figure 8 is a side view of the wiper arm of Figure 2;
Figure 9 is a plan view of the wiper arm of Figure 2;
Figures 10A and 10B are cross-sections of a base section of the wiper arm, taken along the line 10-10 of Figure 9, showing both its shape and size and the direction of the "in plane" and "out of plane" deflections;
Figures 11A and 11B are cross-sections of an intermediate section of the wiper arm, taken along the line 11-11 of Figure 9, showing both the shape and size and the action of the air flow over the arm;
Figures 12 A and 12 B are cross-sections of a tip section of the wiper arm, taken along the line 12-12 of Figure 9, showing both the shape and size and the torsional deflections;
Figure 13 is a schematic perspective showing the cross-sectional shape of the arm taken at a series of points along its length.

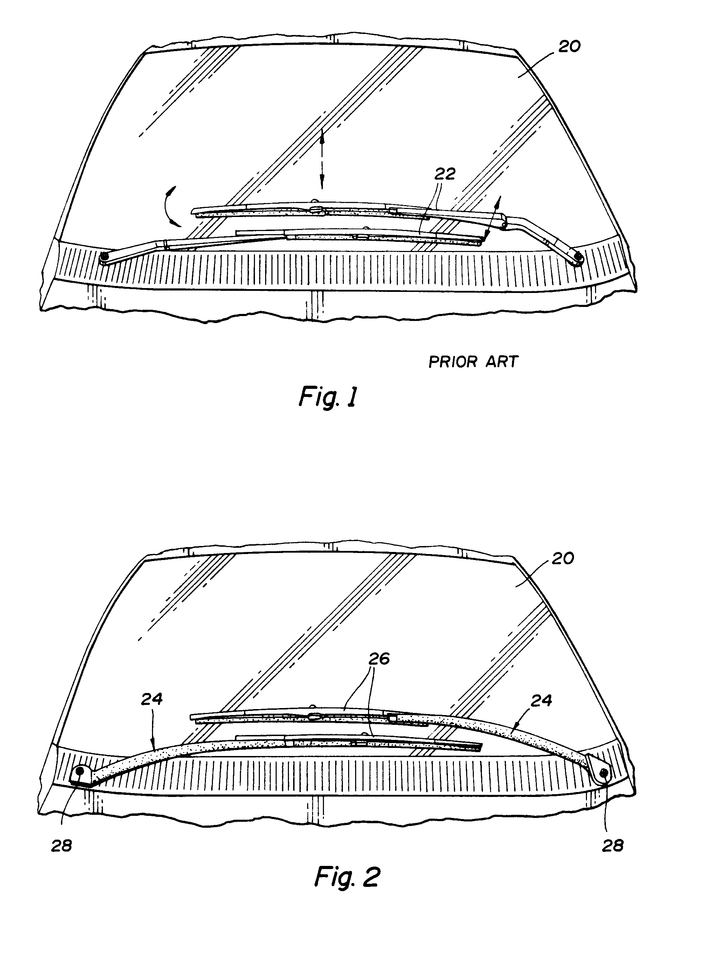

Referring first to Figure 1, a vehicle windshield 20 is illustrated which is of the steeply-raked type. While its surface is generally planar, windshield 20 is not flat, nor is it vertically oriented. Instead, it slopes back steeply, and can also drop off a good deal at the sides, although that feature is not readily apparent in a front-on view. Windshield 20 is consequently more nearly parallel to the flow of air over it. Shown are a pair of conventional, two-piece metal arms 22, each of which must be quite long in order to wipe a sufficient area of the windshield 20. Consequently, each is quite heavy, and requires a proportionally robust drive motor and linkage to operate. In addition, each metal arm 22 is fairly thick, and presents a large profile to the airstream. Figure 1 also illustrates with arrows the "in plane", "out of plane", and twisting directions along which the deflection requirements that any wiper must meet are measured. The deflections are measured by constraining the base, as it would be on the vehicle, and applying torque forces to the tip, as the blade would do.

The requirement for "out of plane" or up and down flexibility of the wiper arm is expressed in terms of the percent change in wiping force resulting from a certain imposed deflection. Specifically, the downward tip force should stay within plus or minus ten percent of its nominal design value with an "out of plane" deflection of plus or minus 15 mm. The requirement for "in plane" stiffness is expressed in terms of a total side to side deflection of the arm resulting from a given imposed force. Specifically, upon application of a force of twenty newtons up and down, the total deflection should be 44 mm. Finally, the requirement for torsional rigidity is expressed in terms of a total angle of twist in each direction resulting from a given imposed torque. Specifically, a torque of 0.85 newton metre should create a total twist of no more than 13 degrees. The design described in detail below meets those particular requirements.

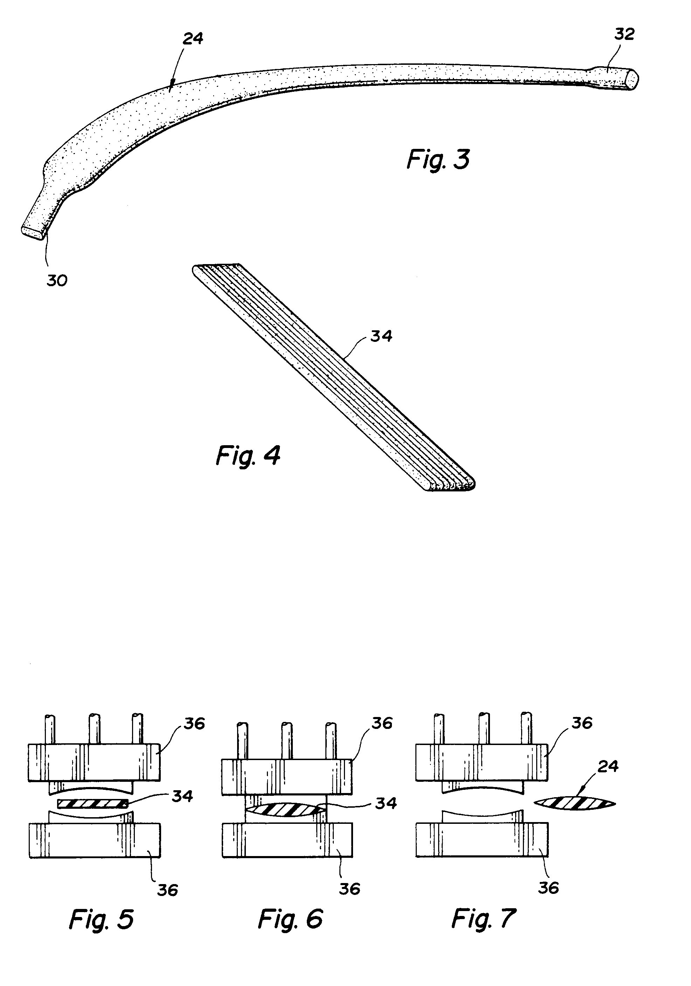

Referring next to Figures 2 and 3, the same windshield 20 is illustrated, but with two wipers that incorporate a preferred embodiment of the wiper arm of the invention, indicated generally at 24. The passenger and driver side arms may be considered identical in terms of the invention described, though they might not be exactly the same size in practice. Arm 24 is a fibre-reinforced composite structure, generally referred to as "fibreglass" or just as "composite". A conventional wiper blade assembly 26 is pinned to the tip of wiper arm 24, and the base of wiper arm 24 is fixed to a conventional wiper post 28. Doing so requires that special metal members should be moulded to the tip and base of arm 24, since fixing metal directly to "composite" by conventional mechanical means is difficult. Moreover, moulding "composite" directly into the shape of a splined bore, which is what is typically used to connect an arm base to a wiper post like 28, is not feasible. How the metal members are moulded to arm 24 is beyond the scope of the present invention. However, arm 24 is illustrated with a base projection 30 and a tip projection 32 to which the metal members may be moulded or otherwise attached, but which do not contribute directly to the invention described below.

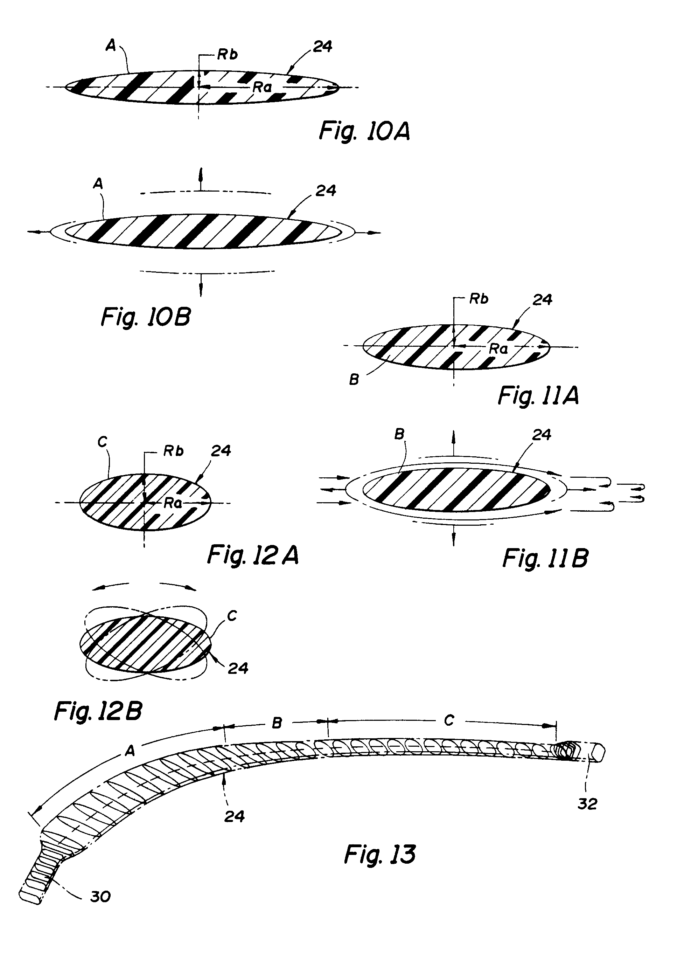

Referring next to Figure 13, the general shape of arm 24 is illustrated. Arm 24 is an elongated, unitary body which, in its pre-installation state, is pre-curved. After installation, arm 24 will be deflected out of its free state, creating a wiping pressure on blade assembly 26. Consequently, the centre axis of arm 24, shown by a dotted line, is not straight. Nevertheless, arm 24 can be usefully depicted as a series of cross-sectional areas, each of which is cut in a plane perpendicular to the centre axis. Each cross-section is a symmetrical ellipse, of a specific shape and size described in detail below. What is more significant to the moulding method is that each cross-section also has a substantially constant area. In addition, the shape of arm 24 in general is basically smooth and flowing, with no sharp bends, angles, voids, corners or other discontinuities. Consequently, arm 24 is very amenable to being compression-moulded as a fibre-reinforced composite member.

Referring next to Figures 4 to 7, the moulding process by which wiper arm 24 is manufactured is illustrated. As shown in Figure 4, a generally rectangular, constant-thickness charge 34 is built up by winding a bundle of glass fibre continuously around a frame and soaking it with a suitable resin, in this case Bisphenol-A epoxy resin. The fibre-to-resin content ratio, by weight, is approximately 72 percent. Charge 34 is placed between a pair of concave mould halves 36, which are machined to match the convex external shape of arm 24. Charge 34 is then compressed and heat-cured, which forces it into the shape of the interior of the mould halves 36. The smooth, flowing, shape of arm 24 means that the fibres do not have to spread or move a great deal between the mould halves 36 as they fill in the symmetrical and elliptical cavity. The fibers are not forced into any tortuous paths or bends that would disrupt the final strength and resilience of arm 24. The fibres run the full length of arm 24, generally straight and parallel to the axis of arm 24, though gently curving. The constant area cross-section means that the fibre-to-resin ratio can also be kept nearly constant at every point along the axis, without having to squeeze out extra resin at any point. This is important to fatigue- resistance of the completed part, and also gives a predictable, relatively low modulus of elasticity of about 34.47 kPa x 10⁶ (5.0 x 10⁶ psi), which is important to the structural response of arm 24.

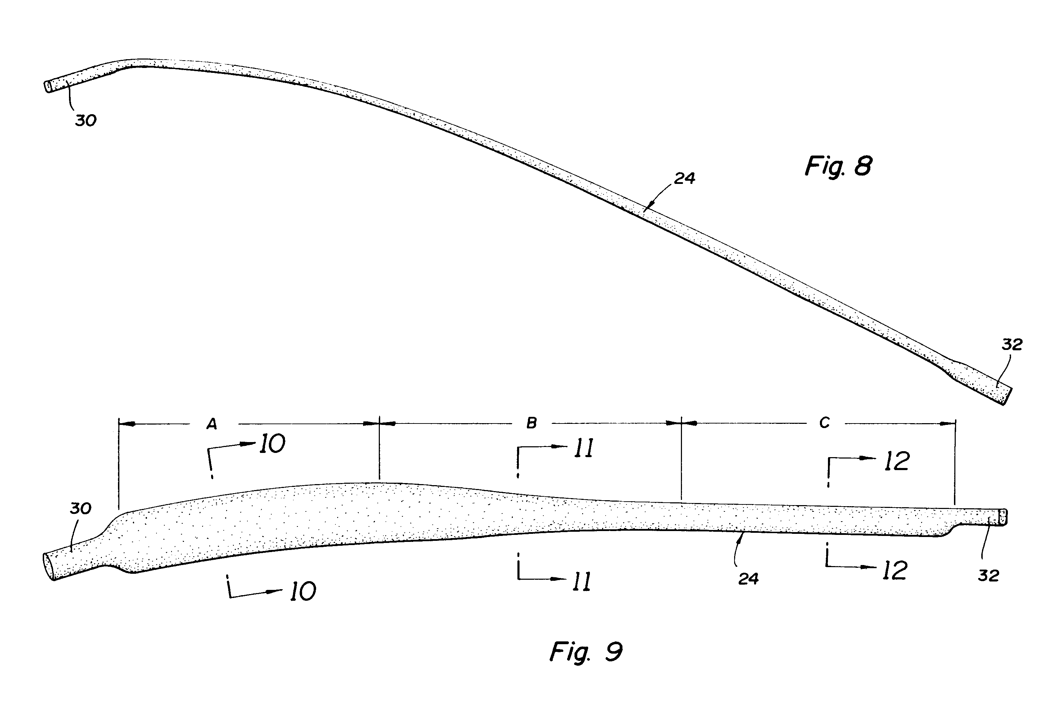

Referring next to Figures 8 to 10B, the specifics of the shape of arm 24 are illustrated. As best illustrated in Figure 9, arm 24, although in one piece, can be conceptualized as being divided into three separate sections. These are a base section A about 127 mm (five inches long), an intermediate section B about 203 mm (eight inches)long, and a tip section C about 228.6 mm (nine inches) long, exclusive of the base and tip projections 30 and 32. The dividing line between A and B and between B and C is somewhat arbitrary, but the base section A and tip section C have very distinct functions and locations. The base section A in cross-section is a long and narrow ellipse with a major axis Rₐ of approximately 19 mm, and a minor axis R_{b} of approximately 1.84 mm. This holds fairly constant over the entire base section A. Arm 24 is oriented so that the major axis Rₐ is generally parallel to windshield 20 and the minor axis R_{b} is generally perpendicular to windshield 20, which is also true for the entire arm 24. Recalling how the "out of plane" and "in plane" stiffness requirements are measured, it will be understood that the maximum bending moment induced in arm 24 occurs in the constrained base section A. Therefore, since a combination of "out of plane" flexibility and "in plane" stiffness is desired, an elliptical cross-section sized and oriented as shown is ideal. Up and down flexibility is good, given the relative thinness of R_{b}, while side to side stiffness is high, given the relative width of Rₐ. That difference is highlighted by the dotted lines in Figure 10B showing deflection in the two directions. It should be kept in mind, however, that whilst the "out of plane" flexibility results from the shape of the base section A, the maximum deflection actually occurs at the unconstrained tip. The shape of base section A is very torsionally compliant, however. If that same relative thinness were to be carried throughout the entire length of arm 24, as is true with the known cantilever arms described above, arm 24 would not meet the torsional rigidity requirement, in addition to not being amenable to moulding as a "composite".

Referring next to Figures 8 and 11 A to 12B, it may be seen how arm 24 does meet the torsional rigidity requirement. Whilst tip section C also has a symmetrical elliptical cross-sectional shape which is wider than it is thick, it is substantially thicker than base section A, and substantially narrower. Specifically, R_{b} is approximately 4.00 mm, and Rₐ is about 8.75 mm. This cross-section maintains the constant area and same basic orientation as base section A. However, it is torsionally much more rigid than the base section A when twisted back and forth, as shown by the dotted line positions. Tip section C is made long enough, relative to the total length of arm 24, to impart enough of its torsional rigidity to arm 24 to meet the requirement noted above. The torsionally rigid section could have any location on arm 24, but it is advantageous to have it at the tip, allowing for a smoother, continuous transition from base to tip. To that end, the intermediate section B also maintains the same elliptical cross-sectional shape and orientation, and the constant area, but with continuously decreasing major axes and continuously increasing minor axes moving from A to C. Thus, as seen in Figure 8, arm 24 generally increases in thickness moving from base to tip, unlike known cantilever arms. For example, at the point where section 11-11 is taken, the major axis Rₐ is approximately 11.1 mm, and the minor axis is approximately 3.1 mm. Thus, the same shape that lends itself to the feasibility of the moulding process also co-operates to give the structural response needed in operation, and vice-versa. Form contributes to function, and function to form.

Referring again to Figure 11 B, another feature of arm 24 is illustrated. By orienting the symmetrical elliptical cross-sections with the major (larger) axes basically parallel to the windshield 20 and the minor (smaller) axes basically perpendicular, very little area is presented straight onto the air flow, minimizing drag. The symmetrical, smooth, elliptical profile of arm 24 cuts through the air flow much more efficiently than would a sharp-edged piece of flat, constant-thickness metal stock. The symmetrical ellipse is not the most aerodynamically efficient or stable profile possible, but is still better than the cross-sectional shapes of known cantilever arms. This is especially true as compared to those designs that are crowned or concave in cross-section. The air flow over the cross-section of arm 24 is fairly smooth, as illustrated by the flow arrows. This, combined with its good torsional rigidity, prevents even rapid air flow from causing arm 24 to go unstable. Although some wind noise may still be apparent, it will at least be comparable to conventional box-beam type arms, and less than known cantilever arms.

The embodiment disclosed may be replicated as described, and will meet the structural requirements given. Another designer may well have different specific quantitative requirements, but they will still have the same qualitative relation of "in plane" stiffness, "out of plane" flexibility, and torsional rigidity. The design of the invention can be adapted to meet other specific structural requirements. This could be done through analytical or empirical methods, or both. The structural requirements for any arm would be as given, as well as constraints, on maximum length, size, and thickness determined by space available. The formula for an ellipse is well-known, of course. Using computer techniques, all of these factors can be incorporated into a model that also incorporates the teachings of the invention of constant cross sectional area and the three different arm sections. Such a model would work through successive iterative steps to optimize the shape disclosed. If an empirical approach is preferred, successive prototypes could be built and tested. Any arm made according to the invention will have the same general shape with constant area elliptical cross-sections, a wider and thinner base section, a narrower and thicker tip section, and the same basic orientation relative to the plane of the windshield, which will give the same basic result. Therefore, it is not intended to limit the invention to just the specific embodiment disclosed but to the scope of the appended claims of the application.

## Claims

1. A unitary, cantilever-type wiper arm (24) for use with a vehicle having a generally planar windshield (20), comprising an elongated composite body (24) formed from a continuous bundle (34) of full-length fibres bound together by a resin, characterised in that said body (24) has a nearly constant area, elliptical cross-section along its length oriented, during use on said vehicle, with the major axis (Rₐ) thereof substantially parallel to the plane of the windshield and the minor axis (R_{b}) thereof substantially perpendicular to the plane of the windshield; said body (24) further being comprised of a base section (A) in which the major axis (Rₐ) is significantly larger than the minor axis (R_{b}) thereof, so as to give said arm (24) a greater stiffness in a direction substantially parallel to the plane of the windshield and a lesser stiffness in a direction perpendicular to the windshield; a tip section (C) in which the minor axis (R_{b}) thereof is significantly larger than the minor axis (R_{b}) of the base section (A), but is more nearly equal to the major axis (Rₐ) of the tip section (C), so as to preserve the nearly constant area of the cross-section of the arm (24) whilst giving substantially greater torsional rigidity to the tip section (C) of said arm to resist twisting loads thereon; and an intermediate section (B) joining said base section (A) and said tip section (C), in which the minor axis (R_{b}) thereof becomes continuously larger moving from said base section (A) to said tip section (C), and the major axis (Rₐ) thereof becomes continuously smaller moving from said base section (A) to said tip section (C), so as to provide a smooth transition in said arm (24) from one section to another whilst maintaining the nearly constant area of the cross-section of the arm (24); and said arm (24) is moulded as a composite structure with a substantially uniform ratio of full-length fibre-to-resin all along its length, by virtue of said nearly constant cross-sectional area of the arm (24).

2. A unitary, cantilever-type wiper arm (24) according to claim 1, in which the base section (A) of the arm (24) is about 127 mm. long, the intermediate section (B) of the arm (24) is about 203 mm. long, and the tip section (C) of the arm (24) is about 228.6 mm. long.

3. A unitary, cantilever-type wiper arm (24) according to claim 2, in which the major axis (Rₐ) of the base section (A) of the arm (24) is about 19 mm. long, the minor axis (R_{b}) of the base section (A) of the arm (24) is about 1.84 mm. long, the major axis (Rₐ) of the tip section (C) of the arm (24) is about 8.75 mm. long, the minor axis (R_{b}) of the tip section (C) of the arm (24) is about 4.00 mm. long, the major axis (Rₐ) of the intermediate section (B) of the arm (24) gradually decreases from about 19 mm. long to about 8.75 mm. long, and the minor axis (R_{b}) of the intermediate section (B) of the arm (24) gradually increases from about 1.84 mm. long to about 4.00 mm. long.
